# EUROPÄISCHE PATENTSCHRIFT

(11) **EP 1 283 769 B1**
(45) Veröffentlichungstag und Bekanntmachung des Hinweises auf die Patenterteilung: **10.11.2004**
(21) Anmeldenummer: 01931304.8
(22) Anmeldetag: 23.05.2001
(51) Int. Cl.: B29C 45/50

(54) **ANTRIEB DER EINSPRITZSCHNECKE EINER KUNSTSTOFFSPRITZGIESSMASCHINE**
INJECTION SCREW DRIVE OF A PLASTIC INJECTION MOLDING MACHINE
MECANISME D'ENTRAINEMENT DE LA VIS D'INJECTION SANS FIN D'UNE MACHINE DE MOULAGE PAR INJECTION DE MATIERE PLASTIQUE

(30) Priorität: 24.05.2000 CH 103600; 28.09.2000 CH 189900; 14.11.2000 CH 221100
(43) Veröffentlichungstag der Anmeldung: 19.02.2003
(73) Patentinhaber: Netstal-Maschinen AG, 8752 Näfels (CH)
(72) Erfinder: CHROMY, Franz, CH-8753 Mollis (CH); WEINMANN, Robert, CH-8872 Weesen (CH); KNOBEL, Erich, CH-8852 Altendorf (CH)
(74) Vertreter: Ackermann, Ernst, Dipl.-Ing. HTL
(86) Internationale Anmeldenummer: PCT/CH2001/000320
(87) Internationale Veröffentlichungsnummer: WO 2001/089798

(56) Entgegenhaltungen:
- EP-A- 0 760 277
- DE-A- 3 937 099
- DE-A- 4 344 335
- DE-C- 4 314 722
- DE-U- 29 516 093
- PATENT ABSTRACTS OF JAPAN vol. 9, no. 294 (M-431), 20. November 1985 (1985-11-20) & JP 60 132720 A (FANUC KK), 15. Juli 1985 (1985-07-15)

## Beschreibung

### Technisches Gebiet

Die Erfindung betrifft einen Antrieb der Einspritzschnecke einer Kunststoffspritzgiessmaschine mit mindestens je einem Elektromotor für die rotative und für die axiale Bewegung der Einspritzschnecke, wobei die rotative und die axiale Bewegung innerhalb der Antriebseinheit zusammenführbar sind.

### Stand der Technik

Beim Kunststoffspritzen werden mehrere aufeinanderfolgende Abläufe unterschieden. Durch einen Einfülltrichter wird Kunststoff in den Einspritzzylinder gespiesen. Die rotierende Einspritzschnecke erfasst das Rohmaterial durch die Schneckengänge und bewegt dieses im geheizten Einspritzzylinder vorwärts. Die rotative Bewegung der Schneckengänge fördert den Kunststoff immer weiter zur Spitze der Einspritzschnecke. Primär durch die Geometrie der Schnecke bzw. durch entsprechende Scherwärme wird das Rohmaterial aufgeschmolzen und kommt als Schmelze in einem Sammelraum unmittelbar vor der Düse an. Als Näherungswert gilt, dass die Schmelzwärme zu einem grossen Teil aus mechanischer Arbeit zwischen Einspritzschnecke und Zylinderwandung und der Rest durch die Mantelheizung aufgebracht wird. Die Schmelze staut sich bei fortgesetzter Drehbewegung der Schnecke im Sammelraum und schiebt die Einspritzschnecke durch Volumen-vergrösserung im Sammelraum in ihrer Achsrichtung rückwärts. Ist die für einen Schuss benötigte Menge an flüssigem Kunststoff im Sammelraum bereit, wird der Schneckendrehantrieb gestoppt. Die an der Spitze der Schnecke angebrachte Rückstromsperre wird durch die Vorwärtsbewegung geschlossen. Die Einspritz-schnecke übernimmt nun die Funktion eines Einspritzkolbens. Zum Einspritzen der Kunststoffmasse in die Form tritt im klassischen Stand der Technik eine Hydraulik in Aktion, welche in der Folge auch Kolbenantrieb genannt wird. Der Kolbenantrieb stösst die ganze Schnecke als reine Axialbewegung nach vorn. Die Einspritzschnecke, nunmehr als reiner Kolben wirkend, spritzt die Schmelze durch die Düse in die Kavitäten der Form. Das Einspritzen selbst erfolgt in zwei Phasen: Die erste Phase ist das eigentliche Füllen. Der erforderliche Druck kann gegen das Ende der Füllphase bis in den Bereich von 2000 bar ansteigen. Nach dem Füllen schliesst die Phase des Nachdruckes an, wobei der Enddruck der Füllphase etwa gehalten wird. Für die Sicherstellung der beschriebenen Abläufe beim Kunststoffspritzen sind zwei grundver-schiedene Antriebsarten Voraussetzung:
- der axiale Antrieb der Plastifizierschnecke im Sinne eines Kolbens
- der rotative Antrieb der Plastifizierschnecke im Sinne einer Förderschnecke

Es war in der Vergangenheit naheliegend, den Kolbenantrieb hydraulisch und den rotativen Antrieb elektromotorisch auszuführen. Die spezifischen Vorteile der zwei unterschiedlichen Abtriebsformen können optimal ausgenutzt werden. Bei hydraulischen Zylindern wird für eine Linearbewegung die grösstmögliche lineare Verschiebekraft ohne Umformung erzeugt. Bei elektromotorischen Antrieben wird dagegen eine rotative Kraft erzeugt, welche als solche mit geeigneter Getriebeuntersetzung zur Verfügung steht.

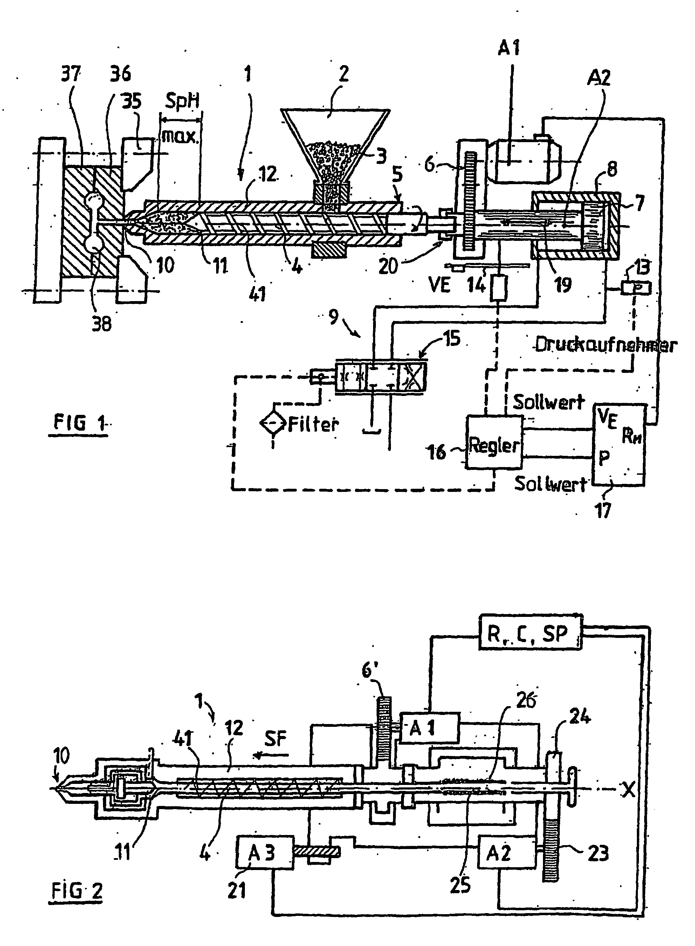

Die Figuren 1 und 2 zeigen zwei typische Lösungen des Standes der Technik: Die Figur 1 zeigt eine hydraulisch/elektrisch kombinierte und die Figur 2 eine sogenannt elektrische Lösung. In der Figur 1 wird die Axialbewegung von einem hydraulischen Kolben und die Rotation durch die Drehache eines Motores betätigt.
Ein anderer Weg wird mit der EP 451 294 gegangen. Für die Einspritzbewegung der Schnecke wird ein reiner Kurbeltrieb mit einer Kurbel oder einem Kniehebelsystem zwischen einer ortsfesten Platte sowie einer zu dieser hin- und von dieser fortbewegbaren Platte vorgeschlagen. Die eine Kurbel ist vorgesehen zum Umsetzen einer Vorwärts- und einer Rückwärtsdrehung der Antriebsache in eine Hin- und Herbewegung der Einspritzförderschnecke. Der Antrieb bzw. Übertrieb für die Axialbewegung der Einspritzschnecke wird als Stosskraft zwischen der ortsfesten Platte und der Förderschnecke genutzt. Es ist der Anmelderin nicht bekannt, ob eine Lösung gemäss EP 451 294 (entspricht DE 690 18 063) in die Praxis umgesetzt wurde. Die Druckschrift richtet sich ausschliesslich auf den speziellen Einsatz eines Kurbelantriebes für die Einspritzförderschnecke. Dabei wurde erkannt, dass es problematisch sein kann, wenn eine Kurbel in Nullpunktnähe betrieben wird. Die Nulloder Totpunktnähe soll bei der vorgeschlagenen Anwendung bei Einspritzschnecken vermieden werden.
Die EP 427 438 zeigt als weitere Möglichkeit die Kombination eines Kniehebelsystems mit einem Zahnstangenantrieb für die Formbewegung. Ein entsprechender Einsatz für den Axialantrieb der Einspritzschnecke ist nicht bekannt geworden. interessant ist jedoch der Vorschlag eines eigentlichen Zahnstangengetriebes mit angeflanschtem Antriebsmotor. Wie in der fachtechnischen Umgangssprache wird in der Folge ein einzelner motorischer Antrieb als einzelne "Achse" im Sinne der Motorachse verstanden. Demgemäss schlägt die EP 427 438 für die eine Achse der Formbewegung einen Zahnstangenantrieb vor. Solche Zahnstangengetriebe haben in der Praxis eine beachtliche Verbreitung für den Antrieb der beweglichen Form gefunden.
Die DE 43 44 335 geht aus einem einem Schneckenantrieb für eine Spritzgiessmaschine zur Verarbeitung von thermoplastischem Material mit einer Schnecke und einem aus zwei Elektromotoren bestehenden Schneckenantrieb, von denen ein Motor zur Durchführung der Drehbewegung der Schnecke und ein Motor zur Durchführung der Axialbewegung der Schnecke vorgesehen ist. Als Lösung wird vorgeschlagen, mindestens ein Hohlwellenmotor zu verwenden, wobei beide Elektromotoren mit ihren Achsen fluchtend zur Achse der Schnecke angeordnet sind. Insbesondere bei Verwendung von zwei Hohlwellenmotoren wird eine kompakte Bauweise erzielt. Der wesentliche Nachteil der Lösung liegt darin, dass Hohlwellenmotoren als Spezialmotoren relativ grossgebaut und teuer sind.

### Darstellung der Erfindung

Der Erfindung lag die Aufgabe zugrunde, ein vorteilhaftes Antriebskonzept für die axiale und der rotative Bewegung der Einspritzschnecke zu entwickeln und die geeigneten Bauteile für eine ökonomische Herstellung zu kombinieren, um für die zwei Bewegungsarten der Einspritzschnecke ein baulich optimales Antriebskonzept zu schaffen.

Der erfindungsgemässe Antrieb der Einspritzschnecke ist dadurch gekennzeichnet, dass er einen Zahnschienenübertrieb mit mindestens einer Doppelzahnschiene für die axiale Bewegung der Einspritzschnecke aufweist.

Die neue Lösung schlägt vor allem zweierlei vor:
- die Verwendung von mindestens einer Doppelzahnschiene sowie
- die Bildung einer Antriebseinheit.

Wie in der Folge noch ausgeführt wird, gestattet die neue Lösung verschiedene Ausführungeswege. Allen gemeinsam sind je unabhängige Elektromotoren für die rotative und die axiale Bewegung. Die Untersuchungen haben gezeigt, dass eine Getriebekombination mit nur einem einfachen Zahnschienenantrieb gemäss Stand der Technik durchaus möglich ist. In der Realisierung ergeben sich mit nur einer Zahnschiene jedoch grosse Kostenprobleme, bedingt durch die Baugrösse der Einzelteile und die Beherrschung der auftretenden Kräfte. Der Doppelzahnschienenantrieb hat sich überraschenderweise als besonders vorteilhaft erwiesen. Die Seitenkräfte gleichen sich zumindest für den wesentlichen Teil von selbst aus. Das Herzstück ist eine Antriebseinheit mit zwei völlig getrennten und unabhängig arbeitenden Antriebsmotoren für die zwei Bewegungsarten der Einspritzschnecke, mit nur einer Achse auf der Abtriebsseite von der Antriebseinheit.

Für die verschiedenen Ausführungswege insbesondere auch für besonders vorteilhafte Ausgestaltungen wird auf die Ansprüche 2 bis 24 Bezug genommen.

Ein wichtiges Kennzeichen eines ersten Ausführungsweges ist eine kompakte Baugruppe bzw. Antriebseinheit, in welcher zwei Doppelzahnschienen parallel zur Achse der Einspritzschnecke den axialen Antrieb sicherstellen. Exakte Abklärungen haben ergeben, dass mit dieser spezifischen Ausgestaltungen eine wirtschaftlich optimale Antriebseinheit herstellbar ist. Dies bedeutet einen, relativ günstigen Herstellpreis und eine ideale Funktion für ein ganzes Antriebskonzept. Es entsteht eine kompakte Baugruppe, bestehend aus mehreren Untergruppen. Bevorzugt werden Schrägverzahnungen eingesetzt. Mit Vorteil sind die Schrägverzahnungen beider Seiten je einer Zahnschiene entgegengerichtet zum Ausgleich der Kräfte aus der Schrägverzahnung. Es wird ferner vorgeschlagen, die Schrägverzahnung beider Doppelzahnschienen je gegengleich auszubilden, zum Ausgleich der Momente aus der Schrägverzahnung der zwei Doppelzahnschienen. Die vorgeschlagene Lösung baut insofern besonders wirtschaftlich, als dass sie den Einsatz von relativ kleinen Zahnritzeln erlaubt, welche in gängiger Grösse viel preisgünstiger sind. Für das Justieren des Zahneingriffes und den möglichst vollständigen Kräfteausgleich werden die Zahnritzel in Richtung ihrer Drehachse verstellbar angeordnet. Im Falle, wo nur ein Ritzel direkt angetrieben wird, können die übrigen durch die Verstellbarkeit für einen optimalen Zahneingriff genau justiert werden.

Der zweite Ausführungsweg weist ebenfalls eine kompakte Baugruppe auf, wobei der Zahnschienenantrieb und der rotative Antrieb in einem Führungsrohr angeordnet ist.

Dank dieser vorteilhaften Ausgestaltung weist der Zahnschienenübertrieb zwei Zahnschienen, je im Abstand und parallel zur Drehachse der Einspritzschnecke und bevorzugt mit der Zahnprofilierung nach aussen gerichtet auf, wobei die Wirkachse des Zahnschienenübertriebes mit der Drehantriebsachse für die rotative Bewegung der Einspritzschnecke zumindest angenähert übereinstimmt.

Der zweite Ausführungsweg ist dadurch gekennzeichnet, dass das Getriebe für die rotative Bewegung und das Getriebe für die axiale Bewegung integriert in einer gemeinsamen Baugruppe zusammengefasst sind. Wie noch gezeigt wird, gestattet der zweite Lösungsweg eine unerwartete Kompaktheit, gerade weil zwei Antriebsachsen einem einzelnen Getriebe zugeordnet werden, was zumindest in der gängigen industriellen Praxis wenig üblich ist. Von einem Getriebe wird vielmehr erwartet, dass von einem motorischen Antrieb bzw. einer Achse ein oder viele Abtriebe vorgesehen werden. Der Antrieb. der Einspritzschnecke verlangt die zwei total unterschiedlichen Antriebsarten (axial und rotativ). Die überraschenden positiven Effekte werden nun an Hand von besonders vorteilhaften Ausgestaltungen erläutert. Die Zahnschiene wird im Abstand und. parallel zu einer gedachten Verlängerung der Drehachse der Einspritzschnecke angeordnet, wobei bevorzugt zwei Zahnschienen symmetrisch je im Abstand und parallel zu der Drehachse der Einspritzschnecke und mit der Zahnprofilierung nach aussen gerichtet angeordnet werden.

Vorteilhafterweise wird die Dreh- und Verschiebemechanik als kompakte Baugruppe ausgebildet und in einem zur Einspritzschneckenachse ausgerichteten Führungsrohr geführt. Die Zahnschienen werden beim ersten und zweiten Ausführungsweg abtriebsseitg über eine feste Verbindung Ober das Gehäuse des Schneckenkupplungsteiles gelagert. Das Schneckenkupplungsteil seiner-seits weist antriebsseitig je ein Axial- sowie ein Radiallager auf, wobei das Gehäuse über ein, zwei oder mehrere Führungsbänder im Führungsrohr gelagert ist. Der rotative Antrieb erfolgt über eine Keilnabe sowie ein Keilwelle, welche einerseits ineinander verschiebar und anderseits mit einem Motorgetriebe verbunden sind. Die Keilwelle ist antriebsseitig im Getriebe gelagert und für die erforderliche Hublänge in einer Keilnäbe gietfähig geführt. Die Keilnabe ist auf der anderen Seite über eine Hülse fest mit der Schneckenkupplung verbunden. Die Keilnabe erstreckt sich mit der Hülse im wesentlichen über die nutzbare Länge der Zahnschienen. Die Keilwelle an sich liegt fluchtend mit der Schneckenwellenachse. Die Hülse und die Zahnstangen sind dazu koaxial angeordnet. Die Grundfunktion der Einspritzschnecke verlangt eine Längsverschiebung bzw. einen je nach Grösse des zu spritzenden Teiles zu bestimmenden Hub, bei einer grösseren Maschine von z.B. 20 cm. Durch das Ineinandersetzen der beiden Triebe, der Zahnschiene sowie der Keilwelle, wird nur ein Minimum an Baulänge benötigt. Der zweite Lösungsweg baut besonders kurz. Die Zahnschienen werden an der, der Einspritzschnecke abgewandten Endseite über einen Abschlussflansch mit einem Führungsband im Führungsrohr geführt. Mit den beschriebenen Ausgestaltungen lässt sich das kombinierte Getriebe extrem kompakt gleichsam in ein Stück Rohr schieben, kann zentralgeschmiert und allseits gegen Schmiermittelaustritt leicht abgedichtet werden und ergibt im Hinblick auf eine Reinraumtechnik eine ideale Voraussetzung. Bevorzugt werden die zwei Zahnschienen als Doppelzahnschienen mit je einem eigenem Antriebsritzel, Getriebe sowie An-triebsmotor, insbesondere einen oder zwei AC-Servomotoren, ausgebildet. Den Antriebsmotoren werden über eine entsprechende Leistungselektronik Rechner- bzw. Steuer-/Regel-mittel zugeordnet, um die Bewegung, insbesondere auch die Antriebsmomente, vollständig auszugleichen.

Die Antriebsmotoren werden mit- ihren Achsen in Bezug auf den Einspritzschneckenantrieb bevorzugt nach oben abstehend angebaut. Dies erlaubt, die ganze Maschine kurz und kompakt zu bauen; zumindest soweit es das Spritzaggregat betrifft. Die ganze Spritzeinheit ruht, wie an sich bekannt, über Führungsschienen verschiebbar, auf dem Maschinenständer. Für die Verschiebebewegung des ganzen Aggregates wird vorzugsweise ein weiteres Antriebskonzept vorgesehen.

### Kurze Beschreibung der Erfindung

Die Erfindung wird nun an Hand einer Gegenüberstellung des Standes der Technik sowie einiger Ausführungsbeispiele mit weiteren Einzelheiten erläutert. Es zeigen:
- die Figuren 1 und 2: zwei Ausgestaltungen des Standes der Technik;
- die Figur 3a und 3b: je eine perspektivische Ansicht eines erfindungsgemässen Doppelachsantriebes mit einem bzw. zwei Antriebsmotoren für die Axialbewegung;
- die Figur 4: einen Längsschnitt IV **-** IV der Figur 3a;
- die Figuren 5a und 5b: den Hub bzw. die Axialbewegung, basierend auf einem Zahnschienenübertrieb;
- die Figur 6: ein Schnitt VI - VI der Figur 4;
- die Figur 7: die Einspritzseite einer Spritzglessmaschine, teilweise im Schnitt;
- die Figur 8a: einen Schnitt X - X der Figur 8b und
- die Figur 8b: einen Schnitt IX - IX der Figur 8a der Getriebekombination;
- die Figur 9: die Getriebekombination mit zwei unabhängigen Antriebsmotoren;
- die Figur 10: die Verstellbarkeit eines Ritzels in dessen Achsrichtung für das Justieren.

### Wege und Ausführung der Erfindung

Die Figur 1 zeigt schematisch als Stand der Technik gleichsam ein Schulbeispiel für die Spritzseit einer Spritzgiessmaschine. Das Herzstück ist ein Einspritzzylinder 1 in den über einen Einfülltrichter 2 Rohmaterial 3, meistens in Granulatform, gespiesen wird. Im Einspritzzylinder 1 befindet sich eine Förderschnecke bzw. Einspritzschnecke 4, welche auf der rechten Seite in einer Lagerstelle 5 gelagert ist. Die rotative Bewegung der Einspritzschnecke wird von der Achse A1 über einen Zahnrädersatz 6 und die axiale Einspritzbewegung (Achse A2) über einen Hydraulikkolben 7 erzeugt, welcher in einem Hydraulikzylinder 8 um einen Axialverschiebeweg bewegbar ist. Der Axialverschiebeweg richtet sich nach der gewünschten Schussmenge für das Spritzen eines Teiles bzw. der entsprechenden Menge bei Mehrfachformen. Ganz links endet der Einspritzzylinder 1 mit einer Düse 10, über welche die geschmolzene Kunststoffmasse 11 in die Kavitäten 38 der zwei Formhälften 36, 37 gespritzt wird. Der Einspritzzylinder 1 ist umgeben von Helzpaketen 12. Mit der Massangabe SpH ist der wählbare Spritzhub eingezeichnet, wobei SptHmax. der maximale Spritzhub bedeutet. Die Technologie des Spritzvorganges wird als bekannt vorausgesetzt. Die für die Hydraulik erforderliche "Peripherie" ist mit Bezugszeichen 9 nur angedeutet. Die Bezugsziffer 13 markiert einen Druckaufnehmer (P) und die Bezugsziffer 14 ein Geschwindigkeitsaufnehmer (VE). Der Kolben 7 wird über ein Servo- oder Proportionalventil 15 gesteuert. Die erforderlichen Steuerimpulse werden von einem Regler 16 bzw. einer Maschinensteuerung 17 ausgegeben. Die rotative Bewegung der Einspritzschnecke 4 wird von einem Antriebsmotor 18 (als Achse AT bezeichnet) betätigt. Die axiale Bewegung wird durch den Hydraulikkolben 7 bzw. die Kolbenstange 19 (Achse A2) ausgelöst. Die beiden Achsen A1 und A2 sind vollständig. unabhängig vonelnander, haben aber als Gemeinsamkeit den selben Abtrieb auf das Kupplungsstück 20 für die Einspritzschnecke 4.

Der Grundaufbau des Einspritzzylinders 1 ist, soweit es den Bereich der Förderschnecke betrifft, für die Figuren 1 und 2 identisch. Die Figur 2 zeigt schematisch ein Beispiel einer rein elektrischen Lösung, Wobei zusätzlich mit einem Motor 21 das ganze Einspritzaggregat für das Zu- und Wegführen der Düse 10 an die Spritzform bewegt wird. Der Motor 18 (Achse A1) treibt die Zahnräder 6' für die rotative Bewegung der Förderschnecke und der Motor 22 die Zahnräder 23 sowie 24 an, für die Kolbenbewegung bzw. die Axialbewegung der Einspritzschnecke 4. Die Bewegungsübertragung kann z.B. über eine Welle. 25 sowie eine Kugelspindel 26 erfolgen.

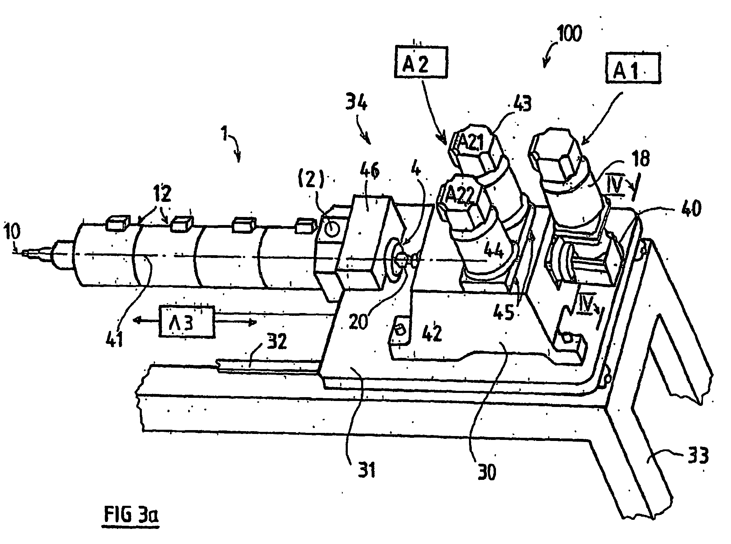

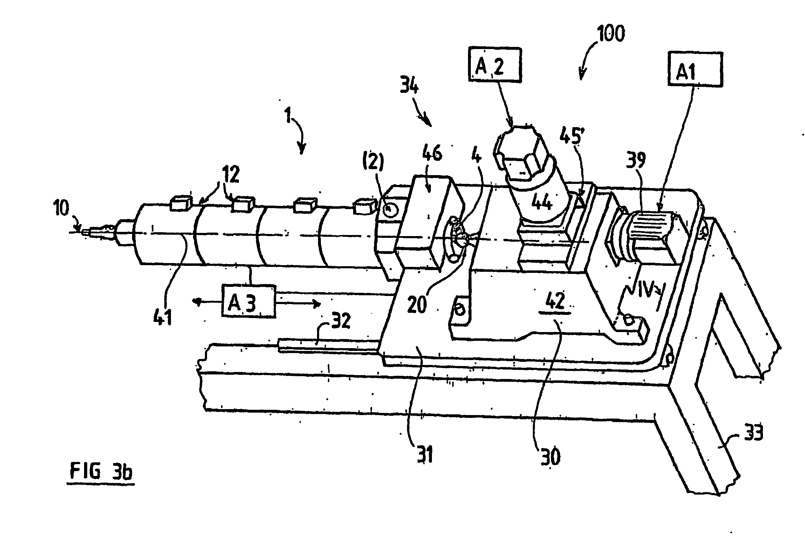

Die Figuren 3a und 3b zeigen in Perspektive zwei Beispiele für die neue Lösung. Ein Doppelachsgetriebe 30 ist auf einer Grundplatte 31 befestigt. Über eine Achse A3 ist das ganze Einspritzaggregat 34 auf Schienen 32 verschiebbar auf dem Maschinenständer 33 angeordnet für die Düsenzustellung an die auf einer festen Formträgerplatte 35 angeordneten Form 36, sinngemäss zu Figur 1. Die in den Figuren 3a und 3b nicht dargestellte Form 36 bildet zusammen mit einer beweglichen Form 37 die Kavitäten 38 für die zu spritzende Kunststoffform. Das markante an der Figur 3a sind neben dem Doppelachsgetriebe 30 die Achsen A1 sowie A2. Für die Achse A2 sind zwei Motoren A2.1 und A2.2 vorgesehen. A2 entspricht dem Antriebsmotor 18 der Figuren 1 und 2. Der Antriebsmotor 18 ist über ein Getriebe 40 mit einem Abtrieb fluchtend mit der Schneckenachse 41 am Getriebegehäuse, 42 angeflanscht. Als Achse A2 sind zwei identische Antriebsmotoren 43 und 44, ebenfalls über je ein Getriebe 45, am Getriebegehäuse 42, angeflanscht. Alle drei Motoren 18 sowie. 43 und 44 haben je eine senkrechte Motorwelle und erlauben dadurch eine sehr kurze Bauweise. Der Einspritzzylinder 1 ist über einen Gehäuseblock 46 mit der Grundptatte 31 verbunden, so dass die Förderschnecke 4 über das von aussen frei zugängliche Kupplungsstück 20 vom Doppelachsgetriebe sowohl axial wie rotativ angetrieben werden kann. Die Aktions bzw. Reaktionskräfte werden primär über die Grundplatte 31 geschlossen. Die Figur 3b weist nur einen Antriebsmotor 44 mit einem Getriebe 45' für den Antrieb von zwei Zahnschienen 65 auf. Das-Getriebe 45' hat entsprechend zwei Abgänge.

Als Variante zu der Figur 3a weist in der Figur 3b die Achse A1 einen Hohlmotor 39 auf, der direkt an dem Getriebegehäuse 42 angeflanscht ist.

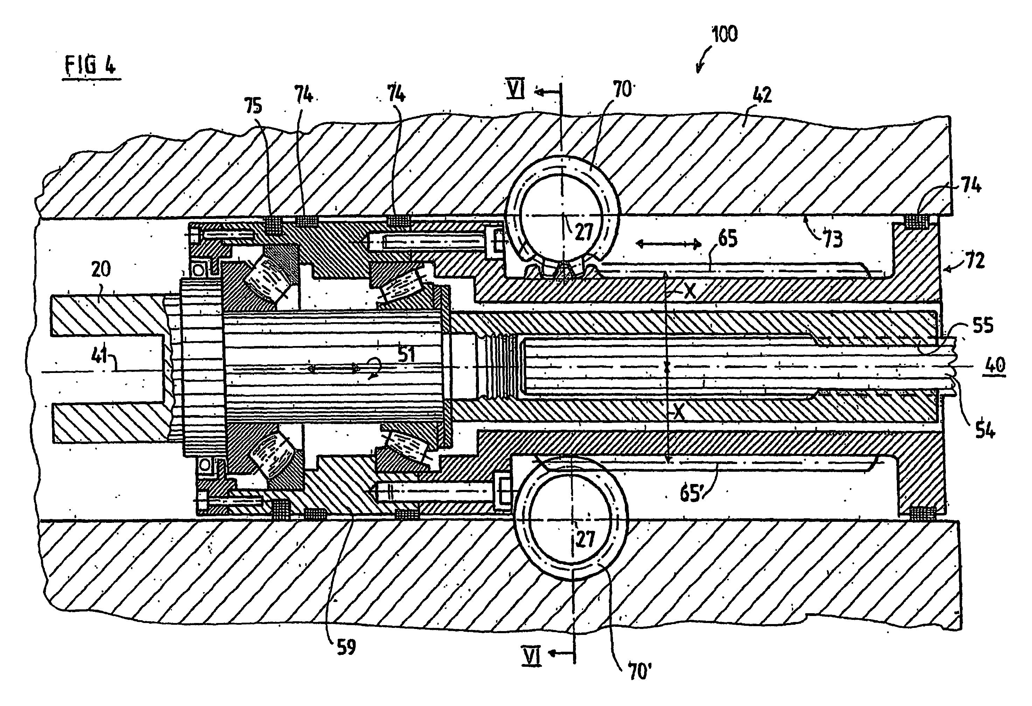

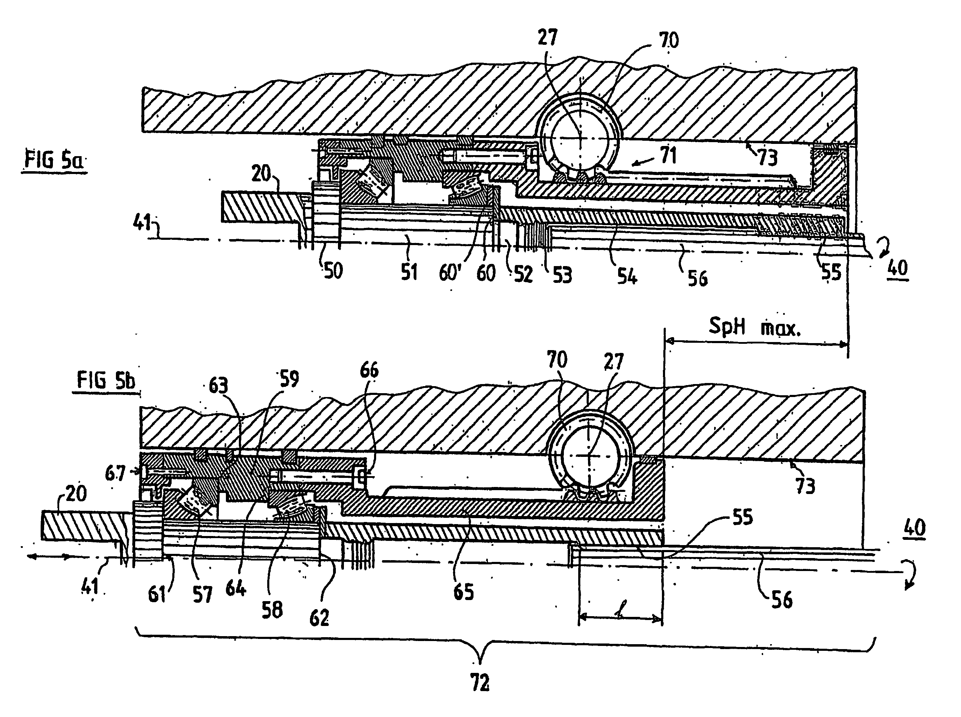

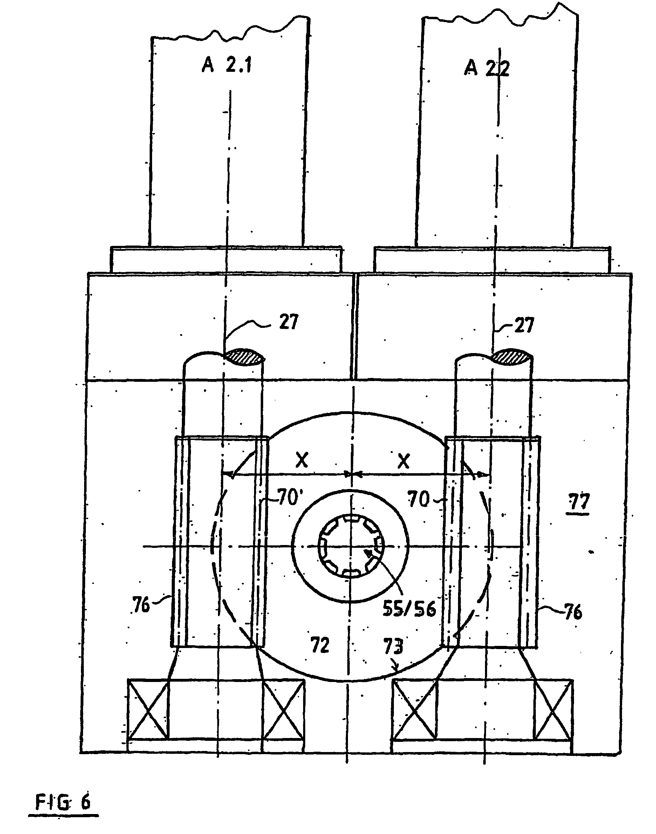

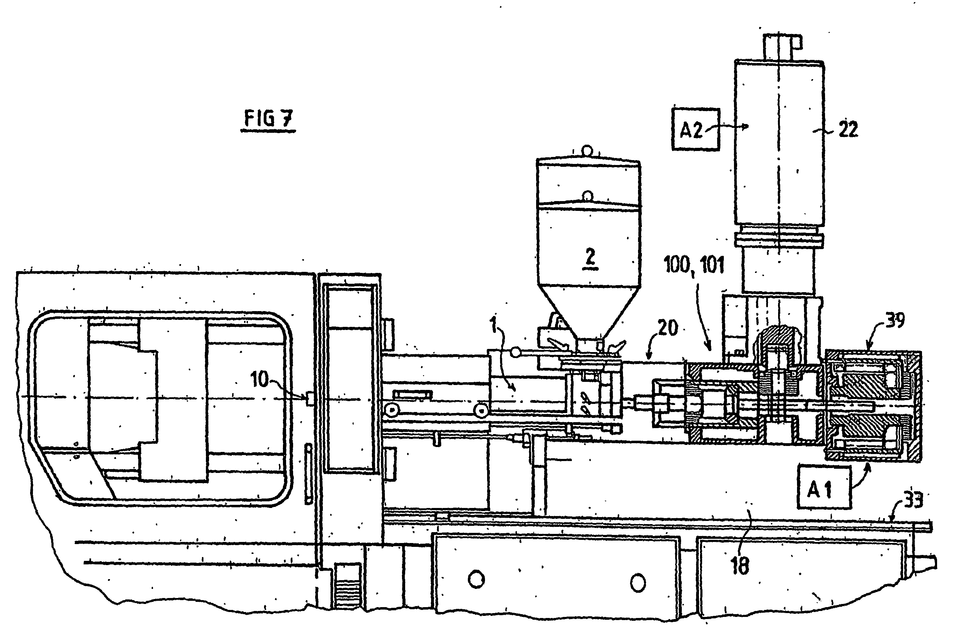

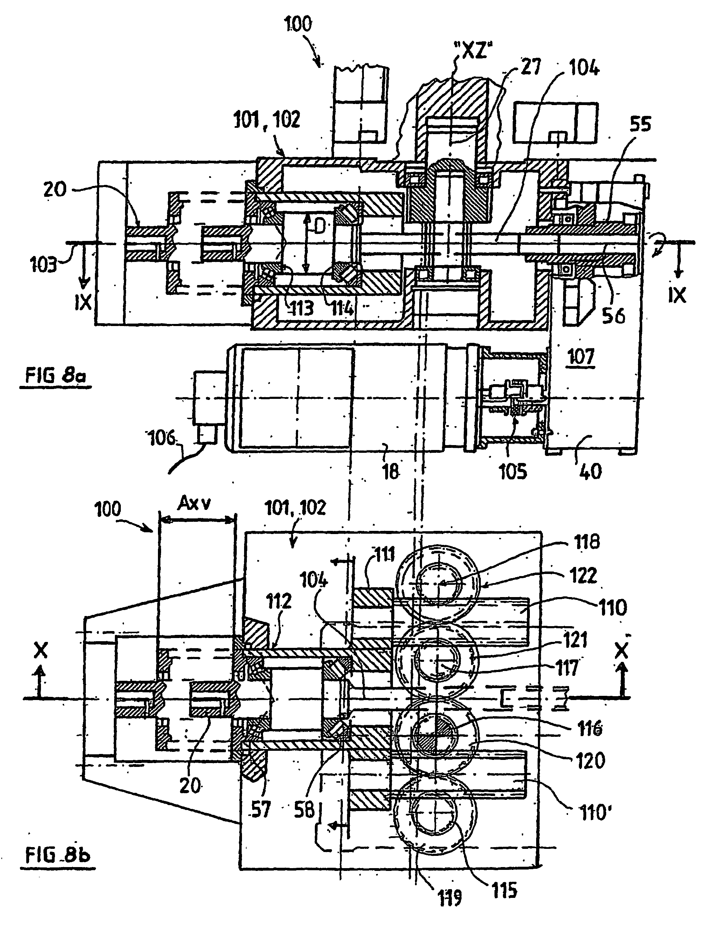

Die Figur 4 sowie 5a und 5b zeigen ein Beispiel für ein Doppelachsgetriebe im Schnitt IV - IV der Figur 3a. In den Figuren 4 und 5a ist die rückwärtige Position der Einspritzschnecke in einer Extremlage dargestellt, z.B. als Servicestellung oder Ausserbetriebsstellung, oder für die maximal mögliche Schneckenrückwärtsposition bzw. für das theoretisch grösst mögliche Spritzteil, bei maximaler Enspritzung der Kunststoffmenge 11 entsprechend Sp H.max. (Figur 1). Die Figur 5b zeigt die-andere Extremlage am Ende jedes Einspritzvorganges bzw. in der Phase des Nachdruckes. Die Schneckenkupplung 20 ist Ober einen Bund 50 und einen Wallenstummel 51, einem Stützbund 52 sowie einer Schraubverbindung 53 mit einer Hülse 54 fest verschraubt und am gegenüberliegenden Ende über eine Keilnabe 55 mit einer Keilwelle 56 und dem Getriebe 40 für die rotative Bewegung verbunden. Das Drehmoment auf die Förderschnecke bzw. Einspritzschnecke 4 wird somit direkt von der Keilnabe 55 über die Hülse 54 auf das Kupplungsstück 20 übertragen, unabhängig der Position der Keilnabe 55 (mit der-Länge I) in Bezug auf die Keilwelle, wie aus den Figuren 5a und 5b ersichtlich ist. Der Wellenstummel 51 ist über zwei kräftige Radial/Axial-Rollenlager 57 und 58 in einer Lagerbüchse 59 gelagert. Die inneren Ringe der beiden Lager 57, 58 sind über Stützringe 60, 60' zwischen den Schultern 61 und 62 gehalten mit der Klemmkraft, erzeugt durch die Hülse 64 und das Gewinde 53. Die äussereri Ringe der beiden Lager 57/58 sind in Bohrungen der Lagerbüchse 59 mit entsprechenden Schultern 63, 64 gehalten, derart dass der axiale Kraftfluss von der Einspritzschnecke 4 direkt über das stärkere Lager 57 und die Lagerbüchse 59 auf die Zahnschiene 65 geleitet wird. Die Zahnschiene 65 ist über Sicherungsschrauben 66 starr mit der Lagerbüchse 59 verbunden und am gegenüberliegenden Ende über einen Fixationsring 67 und dem inneren Lagerring des Lagers 57 gehalten. Die Axialbewegung der Förderschnecke bzw. die entsprechenden Aktions und Reaktionskräfte werden, ausgehend von den beiden Motoren 43, 44, dem Getriebe 45 sowie zwei Zahnritzeln 70, 70' über die zwei Zahnschienen 65, 65', die Lagerbüchse 59, die Lager 57 sowie das Kupplungsstück 20 übertragen. Das Kupplungsstück 20 und der Wellenstummel 51 werden somit von den zwei Achsen A1 sowie A2 (bzw. A2.1/A2.2) angetrieben. Die beiden Hauptübertragungselemente, Keilwellenübertrieb 72 sowie Zahnschienenübertrieb 71, erlauben die beiden Bewegungsarten (axial, rotativ) unabhängig zu kontrollieren und sind zusammengefasst in einem Getriebeblock 77, welcher in einer zylindrischen Bohrung 73 eingebaut ist. Damit eine vollständige Kraftsymmetrie entsteht, ist die Achse A2 zweifach ausgeführt, mit zwei aufeinander abstimmbaren Motoren, zwei Getrieben, zwei Zahnritzeln sowie zwei Zahnschienen. Die Zahnschienen sind, wie mit X-X angegeben ist, je parallel und in gleichem Abstand zur Schneckenachse 41 angeordnet. Die Bezeichnung Doppelachsgetriebe betrifft die jeweiligen Achsen A1 und A2 für die rotativen sowie die axialen Bewegungen der Einspritzschnecke.

Die Figur 6 zeigt schematisch einen Querschnitt durch das Doppelachsgetriebe. Die Figur 6 zeigt deutlich die Symmetrie aller Antriebe bzw. der Kraftübertragungen. Der ganze Getriebebtock 77 ist über Führungsbänder 74 in der Bohrung 73 geführt (Figur 4) und weist einen Abstreifer 75 auf, damit jeglicher Austritt von Schmieröl aus dem' Getriebeinneren verhindert wird. Gemäss Figur 6 sind die Achsen 76 der beiden Zähnritzel senkrecht, was im Hinblick auf die Raumnutzung Vorteile bringt. Die beiden Achsen sollen zueinander parallel sein, können jedoch schräg oder horizontal liegen. Wenn in Richtung der Schneckenachse 41 nach hinten genügend. Platz besteht, kann auch ein Motor 18 mit horizontaler Achse angeordnet werden.

Die Figuren 7, 8a, 8b sowie 9 und 10 zeigen ein weiteres Beispiel für-eine besonders vorteilhafte Ausgestaltung der neuen Lösung. Die an sich gleichen Bauteile sind wie bei den zuvor dargestellten Lösungen mit den selben Bezugszeichen versehen. Die Lösung gemäss Figur 7 zeigt analog der Figuren 3a bis 6 eine echte Getriebekombination 100, bestehend aus einem zentralen Getriebeblock 101 sowie den beiden vorgeschalteten Getrieben 40 und 45 mit den zugehörigen Antriebsmotoren 22 und 18. In der Figur 7 ist der elektromotorische Antrieb der Achse A1 als Hohlmotor 39 ausgebildet. Dies erlaubt eine grösstmögliche bauliche Konzentrierung für den rotativen Antrieb.

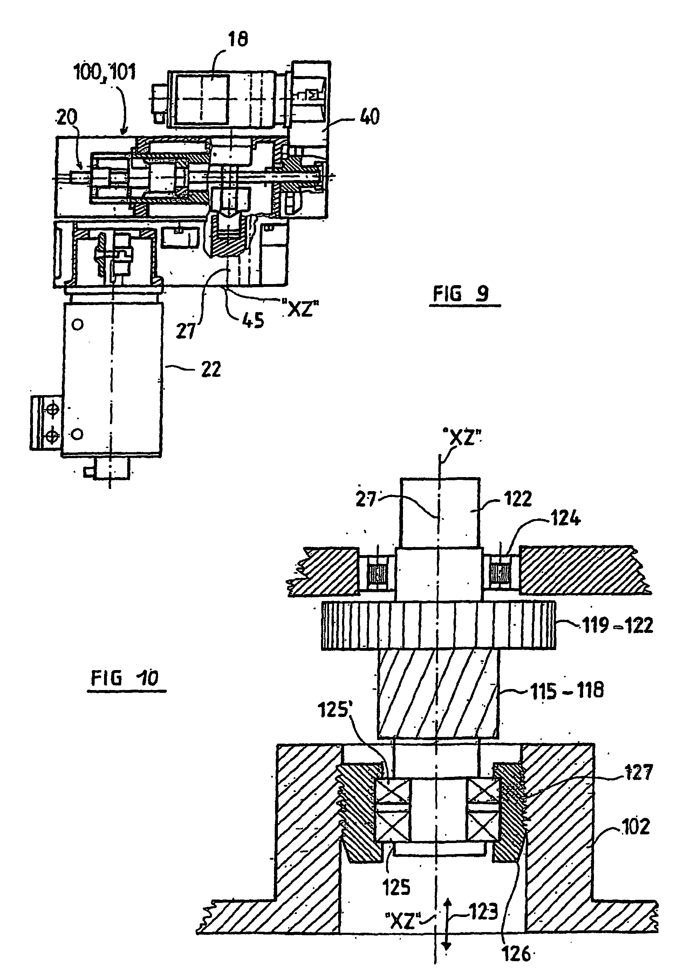

Die Figuren 8a und 8b stellen den zentralen Getriebeblock 101 in grösserem Massstab dar, welcher einen Getriebekasten 102 aufweist. Etwa In der Mittenachse 103 des Getriebekastens 102 befindet sich die Antriebsachse 104, welche auf der Abtriebsseite ein Kupplungsstück 20 und auf der entgegengesetzten Seite eine Keilwelle 56 aufweist. Die Keilwelle 56 wird über eine Keilnabe 55 angetrieben, welche über das Getriebe 40 und eine Kupplung 105 mit dem Antriebsmotor 18 antriebsmässig verbunden ist. Der Antriebsmotor. 18 ist über eine Strom- und Steuerleitung mit einer Maschinensteuerung verbunden. Der Kasten 107 ist fest am Getriebekasten 102 angeschraubt. Im Unterschied zu den Figuren 4 sowie 5a und 5b bewegt sich bei der Lösung gemäss Figuren 8a und 8b die ganze Keilwelle in axialer Richtung innerhalb der Keilnabe. Der axiale Verschiebeweg der Antriebsachse 104 ist mit Axv bezeichnet. Die axiale Bewegung der Einspritzschnecke wird durch die folgenden Elemente sichergestellt: Zwei Doppelzahnschienen 110 und 110' sind je auf einem Zahnschienenquerbalken 111 starr befestigt. Dieser ist mit einer Lagerbüchse 112 verbunden und über die Rollenlager 57 und 58 auf der Antriebsachse 104 abgestützt und axial als kompakte Verschiebeinheit ausgebildet. Die Antriebsachse 104 weist innerhalb der Lagerbüchse 112 einen vergrösserten Durchmesser "D" auf,. so dass über die beiden Schultern 113 und 114 und die Lager 57, 58 die Axialkräfte übertragen bzw. aufgefangen werden. Den Doppelzahnschienen 110, 110' sind je zwei Zahnritzel 115 und 116, respektive 117 und 118 zugeordnet, wobei das Zahnritzel 116 direkt von dem motorischen Antrieb und die drei anderen Ober Übertriebsräder 119, 120, 121, 122 angetrieben werden. Da alle Übertriebsräder 119, 120, 121 und 122 miteinander kämmen, wie in der Figur 9b dargestellt ist, entsteht sowohl für die Zahnräderpaare, welche der Zahnschiene 110 wie auch der Zahnschiene 110' zugeordnet sind, je eine gegensinnige Bewegung. Das gleiche gilt für die beiden, je einer Zahnschiene 110 resp. 110' gegenüberliegenden Ritzelpaare 115/116 resp. 117/118. Die an der Schrägverzahnung entstehenden Seitenkräfte werden damit ebenso wie die aus den beiden Zahnschienen resultierenden Momente ausgeglichen.

Jedes einzelne Zahnritzel 115, 116, 117, 118 kann gemäss Figur-9 und 10 bezüglich seiner jeweiligen Drehachse "XZ", wie mit Pfeil 123 angedeutet ist, für ein exaktes Justieren jedes Zahneingriffes verstellt werden. Die Drehachse "XZ" ist in ihrem oberen Teil über ein Schiebelager 124 und unten über zwei gegeneinander gerichtete Wälzlager 125, 125' in einer Verstellbüchse 126 gehalten. Die Verstellbüchse 126 kann mittels eines Stützgewindes 127 bezüglich des Getriebekastens 102 durch entsprechende Drehbewegung, gemäss Pfeil 123, verstellt werden. Auf diese Weise kann der Zahneingriffsort exakt justiert werden. Wie in der Figur 9 gezeigt ist, können die Antriebsmotoren auch je in die andere Richtung (oben/unten) eingebaut werden.

## Patentansprüche

1. Antriebseinheit für die Einspritzschnecke (4) einer Kunststoffspritz-giessmaschine mit mindestens je einem Elektromotor (A1, A2) für die rotative und für die axiale Bewegung der Einspritzschnecke (4), wobei die rotative und die axiale Bewegung innerhalb der Antriebseinheit (100) zusammenführbar sind,
**dadurch gekennzeichnet,**
**dass** sie einen Zahnschienenübertrieb mit mindestens einer Doppelzahnschiene für die axiale Bewegung der Einspritzschnecke (4) aufweist.

2. Antrieb der Einspritzschnecke (4) nach Anspruch 1,
**dadurch gekennzeichnet,**
**dass** der Übertrieb zwei Doppelzahnschienen (110, 110') aufweist.

3. Antrieb der Einspritzschnecke nach Anspruch 2,
**dadurch gekennzeichnet,**
**dass** die Doppelzahnschienen (110, 110'), beidseits im Abstand und parallel zur Drehachse der Einspritzschnecke (4) angeordnet sind.

4. Antrieb der Einspritzschnecke (4) nach einem der Ansprüche 1 bis 3,
**dadurch gekennzeichnet,**
**dass** der Zahnschienenübertrieb (71) als Schrägverzahnung ausgebildet ist.

5. Antrieb der Einspritzschnecke (4) nach Anspruch 4,
**dadurch gekennzeichnet,**
**dass** die Schrägverzahnungen beider Seiten je einer Doppelzahnschiene (65, 65', 85) entgegengerichtet sind zum Ausgleich der Kräfte aus der Schrägverzahnung.

6. Antrieb der Einspritzschnecke (4) nach Anspruch 4 oder 5,
**dadurch gekennzeichnet,**
**dass** die Schrägverzahnung beider Doppelzahnschienen (110, 110') je gegengleich ausgebildet ist, zum Ausgleich der Momente aus der Schrägverzahnung der zwei Doppelzahnschienen (110, 110').

7. Antrieb der Einspritzschnecke (4) nach einem der Ansprüche 4 bis 6,
**dadurch gekennzeichnet,**
**dass** die Zahnprofilierung der Doppelzahnschienen (110, 110') und die Zahnritzel (115 - 118) auf einer gemeinsamen Ebene angeordnet und die Zahnritzel (115-118) für einen vollständigen-Kräfteausgleich in Richtung ihrer Drehachsen (27) verstellbar sind.

8. Antrieb der Enspritzschnecke (4) nach Anspruch 1,
**dadurch gekennzeichnet,**
**dass** das Getriebe für die rotative Bewegung und das Getriebe für die axiale-Bewegung integriert irr einer gemeinsamen Baugruppe angeordnet sind (Figur 4).

9. Antrieb der Einspritzschnecke (4) nach einem der Ansprüche 1 bis 8,
**dadurch gekennzeichnet,**
**dass** die Dreh- und Verschiebemechanik als kompakte-Baugruppe ausgebildet und in einem koaxial zur Einspritzschneckenachse (41) ausgerichteten Führungsrohr geführt ist (Figur 4).

10. Antrieb der Einspritzschnecke (4) nach Anspruch 8,
**dadurch gekennzeichnet,**
**dass** die Antriebseinheit eine kompakte Baugruppe aufweist, welche in einem koaxial zur Einspritzschneckenachse (41) ausgerichteten Führungsrohr geführt ist, und die Zahnschienen (65, 65') abtriebsseitig über eine feste Verbindung mit der Lagerbüchse (59, 112) des Schneckenkupplungsteils gelagert sind.

11. Antrieb der Einspritzschnecke (4) nach Anspruch 9,
**dadurch gekennzeichnet,**
**dass** das Schneckenkupplungsteil zwei Axial-Radiallager (57, 58) aufweist und die Lagerbüchse (59) über ein Führungsrohr verschiebbar geführt ist.

12. Antrieb der Einspritzschnecke (4) nach einem der Ansprüche 9 bis 11,
**dadurch gekennzeichnet,**
**dass** die Zahnschienen (65, 65') an der, der Einspritzschnecke (4) abgewandten Endseite über einen Abschlussflansch mit einem Führungsband (74) in das Führungsrohr geführt sind.

13. Antrieb der Einspritzschnecke (4) nach einem der Ansprüche 9 bis 12,
**dadurch gekennzeichnet,**
**dass** der Zahnschienenübertrieb zwei Zahnschienen, je im Abstand und parallel zu der Drehachse der Einspritzschnecke (4) und bevorzugt mit der Zahnprofilierung nach aussen gerichtet aufweist, derart, dass die gemeinsame Wirklinie des Zahnantriebes eine Verlängerung der Drehachse der Einspritzschnecke (4) bildet.

14. Antrieb der Einspritzschnecke nach einem der Ansprüche 9 bis 13,
**dadurch gekennzeichnet,**
**dass** die Zahnschienen von einem Antriebsmotor (A2) mit einem Getriebe (45) mit zwei Abgängen oder von zwei Antriebsmotoren (A2.1, A2.2) antreibbar sind, wobei die Antriebsmotoren mit ihren Achsen in Bezug auf den Einspritzschneckenantrieb senkrecht nach oben abstehend angebaut sind.

15. Antrieb der Einspritzschnecke (4) nach Anspruch 1,
**dadurch gekennzeichnet,**
**dass** der rotative Antrieb über eine Keilnabe (55) sowie eine Keilwelle (56) als "Schiebelagerung" erfolgt, welche mit einem Antriebsmotor verbunden ist.

16. Antrieb der Einspritzschnecke (4) nach Anspruch 15,
**dadurch gekennzeichnet,**
**dass** die Keilwelle (56) antriebsseitig in einem Getriebe (40, 80) gelagert und für die erforderliche Hublänge in der Keilnabe (55) geführt zur Übertragung des Drehmomentes über eine Hülse (54) mit der Schneckenkupplung verbunden ist.

17. Antrieb der Einspritzschnecke (4) nach einem der Ansprüche 15 oder 16,
**dadurch gekennzeichnet,**
**dass** die Keilnabe (55) mit Hülse (54) in der rückwärtigen Lage sich im wesentlichen über die Länge der Zahnschienen (65, 65') erstreckt, wobei die Keilwelle (56) fluchtend mit der Schneckenwellenachse liegt und die Hülse (54) und die Zahnschienen (65, 65') koaxial bzw. symmetrisch dazu angeordnet sind.

18. Antrieb der Einspritzschnecke (4) nach einem der Ansprüche 1 bis 8,
**dadurch gekennzeichnet,**
**dass** die Zahnschienen (85, 110, 110') an einem Vierkantprofil mit zweiseitiger Verzahnung ausgebildet sind.

19. Antrieb der Einspritzschnecke (4) nach Anspruch 1 oder 18,
**dadurch gekennzeichnet,**
**dass** er wenigstens einen Zahnschienenübertrieb (83 - 86) für die axialer Bewegung der Einspritzschnecke (4) aufweist und als Doppelachsgetriebe ausgebildet ist, wobei die Wirkachse der Zahnschiene (85) mit der Drehantriebsachse für die rotative Bewegung der Einspritzschnecke (4) im Sinne einer Fortsetzung übereinstimmt.

20. Antrieb der Einspritzschnecke (4) nach Anspruch 19,
**dadurch gekennzeichnet,**
**dass** das Getriebe (80) für die rotative Bewegung und das Getriebe (81) für die axiale Bewegung der Einspritzschnecke (4) je eigene Getriebegehäuse (82) aufweisen (Figur 7a).

21. Antrieb der Einspritzschnecke (4) nach einem der Ansprüche 18 bis 20,
**dadurch gekennzeichnet,**
**dass** in dem Getriebe (80) für die rotative Bewegung der Einspritzschnecke eine Schiebelagerung mit Keilnabe (55) und Keilwelle (56) angeordnet ist.

22. Antrieb der Einspritzschnecke (4) nach einem der Ansprüche 1 bis 18,
**dadurch gekennzeichnet,**
**dass** der Elektromotor (A1) für die rotative Bewegung der Einspritzschnecke (4) als Asynchron-Servomotor ausgebildet ist.

23. Antrieb der Einspritzschnecke (4) nach einem der Ansprüche 1 bis 18,
**dadurch gekennzeichnet,**
**dass** der Elektromotor (A1) für die rotative Bewegung der Einspritzschnecke (4) als Hohlmotor (39) ausgebildet ist.

24. Antrieb der Einspritzschnecke (4) nach einem der Ansprüche 1 bis 25,
**dadurch gekennzeichnet,**
**dass** der Elektromotor (A2) für die axiale Bewegung der Einspritzschnecke (14) als AC-Synchron-Servomotor mit Leistungselektronik mit zugeordneten Rechner- sowie Steuer-/Regelmittel ausgebildet ist.

## Claims

1. Drive unit for the injection screw (4) of a plastics injection moulding machine having at least one respective electrical motor (A1, A2) for the rotative and for the axial movement of the injection screw (4), wherein the rotative and the axial movement can be combined within the drive unit (100), **characterised in that** it has a rack rail overdrive with at least one double rack rail for the axial movement of the injection screw (4).

2. Drive of the injection screw (4) according to claim 1, **characterised in that** the overdrive has two double rack rails (110, 110').

3. Drive of the injection screw according to claim 2, **characterised in that** the double rack rails (110, 110') are arranged on both sides at a distance from and parallel to the axis of rotation of the injection screw (4).

4. Drive of the injection screw (4) according to any one of claims 1 to 3, **characterised in that** the rack rail overdrive (71) is configured as a helical gearing.

5. Drive of the injection screw (4) according to claim 4, **characterised in that** the helical gearings of both sides are each opposite a double rack rail (65, 65', 85), to balance the forces from the helical gearing.

6. Drive of the injection screw (4) according to either claim 4 or claim 5, **characterised in that** the helical gearing of each of the two double rack rails (110, 110') is configured in a diametrically opposed manner, to balance the momentum from the helical gearing of the two double rack rails (110, 110').

7. Drive of the injection screw (4) according to any one of claims 4 to 6, **characterised in that** the gear-tooth profile of the double rack rails (110, 110') and the pinion gears (115 to 118) are arranged on a common plane and the pinion gears (115 to 118) can be adjusted for a complete balancing of the forces in the direction of their axes of rotation (27).

8. Drive of the injection screw (4) according to claim 1, **characterised in that** the gearing for the rotative movement and the gearing for the axial movement are integrated in a common assembly (Fig. 4).

9. Drive of the injection screw (4) according to any one of claims 1 to 8, **characterised in that** the rotation and displacement mechanism is configured as a compact assembly and is guided in a guide tube that is aligned coaxially to the axis of the injection screw (41) (Fig. 4).

10. Drive of the injection screw (4) according to claim 9, **characterised in that** the drive unit has a compact assembly guided in a guide tube that is aligned coaxially to the axis of the injection screw (41) and the rack rails (65, 65') are supported on the output side by means of a secure connection with the bearing bushing (59, 112) of the screw coupling part.

11. Drive of the injection screw (4) according to claim 9, **characterised in that** the screw coupling part has two axial radial bearings (57, 58) and the bearing bushing (59) is displaceably guided by means of a guide tube.

12. Drive of the injection screw (4) according to any one of claims 9 to 11, **characterised in that** the rack rails (65, 65') are guided with a guide band (74) into the guide tube at the end side remote from the injection screw (4) by means of a blind flange.

13. Drive of the injection screw (4) according to any one of claims 9 to 12, **characterised in that** the rack rail overdrive has two rack rails, each at a distance from and parallel to the axis of rotation of the injection screw (4) and preferably with the gear-tooth profile directed outward in such a way that the common line of action of the gear drive forms an extension of the axis of rotation of the injection screw (4).

14. Drive of the injection screw according to any one of claims 9 to 13, **characterised in that** the rack rails can be driven by a drive motor (A2) with a gearing (45) with two outputs or by two drive motors (A2.1, A2.2), the drive motors being attached with their axles perpendicularly projecting upward relative to the injection screw drive.

15. Drive of the injection screw (4) according to claim 1, **characterised in that** the rotative drive is effected by means of a splined hub (55) and a splined shaft (56) as a sliding bearing, which is connected to a drive motor.

16. Drive of the injection screw (4) according to claim 15, **characterised in that** the splined shaft (56) is mounted on the drive side in a gearing (40, 80) and guided in the splined hub (55) for the required stroke length, and **in that** it is connected to the screw coupling by means of a sleeve (54), for transmitting the moment of torsion.

17. Drive of the injection screw (4) according to either claim 15 or claim 16, **characterised in that** the splined hub (55) and the sleeve (54) run in the backward position substantially over the length of the rack rails (65, 65'), the splined shaft (56) being aligned with the axis of the screw shaft and the sleeve (54) and the rack rails (65, 65') being arranged coaxially and/or symmetrically thereto.

18. Drive of the injection screw (4) according to any one of claims 1 to 8, **characterised in that** the rack rails (85, 110, 110') are configured on a square profile with two-sided gearing.

19. Drive of the injection screw (4) according to either claim 1 or claim 18, **characterised in that** it has at least one rack rail overdrive (83 to 86) for the axial movement of the injection screw (4) and is configured as a double axle gearing, the axis of action of the rack rail (85) corresponding to the axis of rotation for the rotative movement of the injection screw (4) in the sense of a continuation.

20. Drive of the injection screw (4) according to claim 19, **characterised in that** the gearing (80) for the rotative movement and the gearing (81) for the axial movement of the injection screw (4) each have their own gear housing (82) (Fig. 7a).

21. Drive of the injection screw (4) according to any one of claims 18 to 20, **characterised in that** a sliding bearing with a splined hub (55) and splined shaft (56) is arranged in the gearing (80) for the rotative movement of the injection screw.

22. Drive of the injection screw (4) according to any one of claims 1 to 18, **characterised in that** the electrical motor (A1) for the rotative movement of the injection screw (4) is configured as an asynchronous servomotor.

23. Drive of the injection screw (4) according to any one of claims 1 to 18, **characterised in that** the electrical motor (A1) for the rotative movement of the injection screw (4) is configured as a hollow motor (39).

24. Drive of the injection screw (4) according to any one of claims 1 to 25, **characterised in that** the electrical motor (A2) for the axial movement of the injection screw (4) is configured as an AC-synchronous servomotor with performance electronics and associated computer means and control/adjustment means.

## Revendications

1. Unité de commande pour la vis sans fin d'injection (4) d'une presse d'injection de plastique avec au moins un moteur électrique (A1, A2) pour le mouvement de rotation et le mouvement axial de la vis sans fin d'injection (4), moyennant quoi le mouvement de rotation et le mouvement axial peuvent être réunis à l'intérieur de l'unité de commande (100), **caractérisée en ce qu'**elle comporte un entraînement à crémaillère avec au moins une double crémaillère pour le mouvement axial de la vis sans fin d'injection (4).

2. Commande de la vis sans fin d'injection (4) selon la revendication 1, **caractérisée en ce que** l'entraînement comporte deux doubles crémaillères (110, 110').

3. Commande de la vis sans fin d'injection selon la revendication 2, **caractérisée en ce que** les doubles crémaillères (110, 110') sont disposées de façon bilatérale à distance et parallèlement à l'axe de rotation de la vis sans fin d'injection (4).

4. Commande de la vis sans fin d'injection (4) selon l'une quelconque des revendications 1 à 3, **caractérisée en ce que** l'entraînement à crémaillère (71) est conçu en tant que denture hélicoïdale.

5. Commande de la vis sans fin d'injection (4) selon la revendication 4, **caractérisée en ce que** les dentures hélicoïdales sont disposées en sens inverse des deux côtés d'une double crémaillère (65, 65', 85) pour compenser les forces issues de la denture hélicoïdale.

6. Commande de la vis sans fin d'injection (4) selon la revendication 4 ou 5, **caractérisée en ce que** la denture hélicoïdale est formée de façon diamétralement opposée des deux côtés de la double crémaillère (110, 110'), pour compenser les moments de la dentelure hélicoïdale des deux doubles crémaillères (110, 110').

7. Commande de la vis sans fin d'injection (4) selon l'une quelconque des revendications 4 à 6, **caractérisée en ce que** le profil de la dent des doubles crémaillères (110, 110') et les pignons (115-118) sont disposés sur le même niveau et **en ce que** les pignons (115 - 118) peuvent être réglés pour compenser entièrement les forces dans le sens de leurs axes de rotation (27).

8. Commande de la vis sans fin d'injection (4) selon la revendication 1, **caractérisée en ce que** le mécanisme pour le mouvement de rotation et le mécanisme pour le mouvement axial sont disposés de façon à être intégrés dans un sous-groupe commun.

9. Commande de la vis sans fin d'injection (4) selon l'une quelconque des revendications 1 à 8, **caractérisée en ce que** le mécanisme de rotation et de déplacement est formé comme sous-groupe compact et est introduit dans un tube conducteur placé de façon coaxiale à l'axe de la vis sans fin d'injection (41) (figure 4).

10. Commande de la vis sans fin d'injection (4) selon la revendication 9, **caractérisée en ce que** l'unité de commande comporte un sous-ensemble compact, lequel est introduit dans un tube conducteur disposé de façon coaxiale à l'axe de la vis sans fin d'injection (41), et **en ce que** les crémaillères (65, 65') sont placées du côté de la sortie par le biais d'une connexion fixe avec un coussinet (59, 112) du demi-accouplement de la vis sans fin.

11. Commande de la vis sans fin d'injection (4) selon la revendication 9, **caractérisée en ce que** le demi-accouplement de la vis sans fin comporte deux roulements à billes radiaux axiaux (57, 58), et **en ce que** le coussinet (59) est introduit de façon à pouvoir être déplacé dans un tube conducteur.

12. Commande de la vis sans fin d'injection (4) selon l'une quelconque des revendications 9 à 11, **caractérisée en ce que** les crémaillères (65, 65') sont introduites dans le tube conducteur avec une bande d'introduction (74) via une fausse bride, au niveau de l'extrémité opposée à la vis sans fin d'injection (4).

13. Commande de la vis sans fin d'injection (4) selon l'une quelconque des revendications 9 à 12, **caractérisée en ce que** l'entraînement à crémaillère comporte deux crémaillères, chacune placée à distance et parallèlement à l'axe de rotation de la vis sans fin d'injection (4) et, de préférence, avec le profil de la dent orienté vers l'extérieur, de sorte que la ligne effective commune de la commande par engrenage forme un prolongement de l'axe de rotation de la vis sans fin d'injection (4).

14. Commande de la vis sans fin d'injection selon l'une quelconque des revendications 9 à 13, **caractérisée en ce que** les crémaillères peuvent être entraînées par un moteur d'entraînement (A2) avec un mécanisme (45) avec deux sorties ou par deux moteurs d'entraînement (A2.1, A2.2), moyennant quoi les moteurs d'entraînement sont conçus avec leurs axes orientés verticalement vers le haut par rapport à la commande de la vis sans fin d'injection.

15. Commande de la vis sans fin d'injection (4) selon la revendication 1, **caractérisée en ce que** la commande de rotation est effectuée via un moyeu cannelé (55) ainsi qu'un arbre cannelé (56) comme "disposition coulissante", laquelle est reliée à un moteur d'entraînement.

16. Commande de la vis sans fin d'injection (4) selon la revendication 15, **caractérisée en ce que** l'arbre cannelé (56) est placé du côté de la commande dans un mécanisme (40, 80) et est relié à l'accouplement de la vis sans fin via un manchon d'accouplement (54) pour la longueur de levage requise introduite dans le moyeu cannelé (55) pour la transmission du moment de rotation.

17. Commande de la vis sans fin d'injection (4) selon l'une quelconque des revendications 15 ou 16, **caractérisée en ce que** le moyeu cannelé (55) avec le manchon d'accouplement (54) s'étend principalement sur la longueur des crémaillères (65, 65') dans la position arrière, moyennant quoi l'arbre cannelé (56) est aligné avec l'axe de l'arbre de la vis sans fin et le manchon d'accouplement (54) et les crémaillères (65, 65') sont disposés de façon coaxiale ou symétrique à cet effet.

18. Commande de la vis sans fin d'injection (4) selon l'une quelconque des revendications 1 à 8, **caractérisée en ce que** les crémaillères (85, 110, 110') sont formées au niveau d'un profil carré avec une denture bilatérale.

19. Commande de la vis sans fin d'injection (4) selon les revendications 1 ou 18, **caractérisée en ce qu'**elle comporte au moins un entraînement à crémaillère (83-86) pour le mouvement axial de la vis sans fin d'injection (4), et **en ce qu'**elle est formée comme mécanisme à axe double, moyennant quoi l'axe actif de la crémaillère (85) correspond à l'axe d'entraînement de rotation pour le mouvement de rotation de la vis sans fin d'injection (4) dans le sens d'un prolongement.

20. Commande de la vis sans fin d'injection (4) selon la revendication 19, **caractérisée en ce que** le mécanisme (80) pour le mouvement de rotation et le mécanisme (81) pour le mouvement axial de la vis sans fin d'injection (4) comportent chacun un logement de mécanisme propre (82) (figure 7a).

21. Commande de la vis sans fin d'injection (4) selon l'une quelconque des revendications 18 à 20, **caractérisée en ce qu'**une disposition coulissante avec un moyeu cannelé (55) et un arbre cannelé (56) est disposée dans le mécanisme (80) pour le mouvement de rotation de la vis sans fin d'injection.

22. Commande de la vis sans fin d'injection (4) selon l'une quelconque des revendications 1 à 18, **caractérisée en ce que** le moteur électrique (A1) est formé comme servomoteur asynchrone pour le mouvement de rotation de la vis sans fin d'injection (4).

23. Commande de la vis sans fin d'injection (4) selon l'une quelconque des revendications 1 à 18, **caractérisée en ce que** le moteur électrique (A1) est formé comme moteur à guide d'ondes (39) pour le mouvement de rotation de la vis sans fin (4).

24. Commande de la vis sans fin d'injection (4) selon l'une quelconque des revendications 1 à 25, **caractérisée en ce que** le moteur électrique (A2) est formé comme servomoteur synchrone AC pour le mouvement axial de la vis sans fin d'injection (4) avec une électronique de puissance avec un ordinateur associé ainsi que des moyens de commande/de réglage.
